# EUROPÄISCHE PATENTSCHRIFT

(11) **EP 1 438 206 B1**
(45) Veröffentlichungstag und Bekanntmachung des Hinweises auf die Patenterteilung: **02.11.2006**
(21) Anmeldenummer: 02802286.1
(22) Anmeldetag: 27.09.2002
(51) Int. Cl.: B60H 1/00, B60S 1/02

(54) **VERFAHREN ZUR BESCHLAGSVERMEIDUNG AN SCHEIBEN EINES KRAFTFAHRZEUGES**
METHOD FOR PREVENTING MIST FORMATION OF A MOTOR VEHICLE GLASS PANES
PROCEDE POUR EVITER L'EMBUAGE DES VITRES D'UN VEHICULE

(30) Priorität: 26.10.2001 DE 10153000
(43) Veröffentlichungstag der Anmeldung: 21.07.2004
(73) Patentinhaber: Preh GmbH, 97616 Bad Neustadt a.d. Saale (DE)
(72) Erfinder: SCHMITT, Hans-Michael, 97702 Münnerstadt (DE); BACH, Jürgen, 97616 Salz (DE); OENNIG, Günther, 97616 Salz (DE); POLZER, Thomas, 97616 Bad Neustadt (DE); BLAUFUSS, Martin, 98617 Sülzfeld (DE)
(74) Vertreter: Thul, Hermann
(86) Internationale Anmeldenummer: PCT/EP2002/010870
(87) Internationale Veröffentlichungsnummer: WO 2003/037665

(56) Entgegenhaltungen:
- PATENT ABSTRACTS OF JAPAN vol. 010, no. 222 (M-504), 2. August 1986 (1986-08-02) & JP 61 060356 A (NIPPON DENSO CO LTD), 28. März 1986 (1986-03-28)
- PATENT ABSTRACTS OF JAPAN vol. 018, no. 136 (M-1572), 7. März 1994 (1994-03-07) & JP 05 319088 A (CALSONIC CORP), 3. Dezember 1993 (1993-12-03)
- PATENT ABSTRACTS OF JAPAN vol. 017, no. 056 (M-1362), 4. Februar 1993 (1993-02-04) & JP 04 266554 A (OMRON CORP), 22. September 1992 (1992-09-22)
- PATENT ABSTRACTS OF JAPAN vol. 012, no. 131 (M-688), 22. April 1988 (1988-04-22) & JP 62 253515 A (DIESEL KIKI CO LTD), 5. November 1987 (1987-11-05)

## Beschreibung

### Technisches Gebiet

Die Erfindung betrifft ein Verfahren zur Beschlagsvermeidung nach dem Oberbegriff des Patentanspruchs 1.

### Stand der Technik

Bekanntlich werden bei geregelten Heiz- und Klimaanlagen bei der Regelung die für das Komfortempfinden wesentlichen Einflußgrößen berücksichtigt. Insbesondere der beginnende Beschlag an der Windschutz- bzw. den anderen Scheiben soll dabei vermieden werden. Beschlag tritt dann auf, wenn bei gegebener relativer Luftfeuchte im Kraftfahrzeug durch äußere Einflüsse die Scheibentemperatur kälter als die Lufttemperatur im Innenraum ist (wird) und so an der Scheibeninnenseite die Taupunkttemperatur unterschritten wird. Auch eine plötzliche Erhöhung der Innenraumfeuchte erhöht die Gefahr der Beschlagsbildung. Um beginnende Beschlagsneigung detektieren zu können, werden Beschlags- bzw. Feuchtesensoren eingesetzt, deren Sensorsignale wiederum beschlagsvermeidende Maßnahmen aktivieren können.

Ein derartiges Verfahren zur Verhinderung von Scheibenbeschlag in einem Kraftfahrzeug beschreibt die DE 199 07 401 A1. Hierbei wird von einem Feuchtesensor die sich auf eine Scheibe niederschlagende relative Feuchtigkeit als relative Feuchte der Scheibe gemessen. Unter Berücksichtigung der Sonneneinstrahlung wird die Erwärmung des Feuchtesensors bestimmt und aus dieser Information und der gemessenen Erwärmung die tatsächliche relative Feuchte an der Scheibe ermittelt. In einer weiteren Ausführungsform werden neben der Sonneneinstrahlung auch die Innen- und/oder Außentemperaturen erfaßt und berücksichtigt.

Ein Verfahren und eine Anordnung zur Mischluftregelung einer Heiz-/Klimaanalge eines Kraftfahrzeuges wird in der DE 196 32 059 C2 beschrieben. Dabei sollen das Verfahren sowie die Anordnung zur Optimierung des Energieverbrauchs beitragen. Die Bestimmung der spezifischen Daten für eine optimale Regelung erfolgt durch Messung der Temperatur und der relativen Luftfeuchtigkeit des jeweiligen Luftstromes.

Eine Vorrichtung zur Erfassung des Betauungs- oder Vereisungsgrades einer Fahrzeugscheibe gibt die DE 43 16 557 A1 wieder. Ein Sensor liefert ein Signal über den Betauungs- oder Vereisungsgrad einer großen Scheibenfläche. Mit Hilfe dieser Information werden rechtzeitig Gegenmaßnahmen, z.B. das Einschalten eines Gebläsemotors, aktiviert.

JP-A-61060356 offenbart den Oberbegriff des Anspruchs 1.

### Darstellung der Erfindung

Die Aufgabe der vorliegenden Erfindung besteht darin, ein Verfahren zur Vermeidung von Beschlag an einer Kraftfahrzeugscheibe aufzuzeigen.

Gelöst wird die Aufgabe durch die Merkmale des Patenanspruchs 1.

Der Erfindung liegt die Idee zugrunde, das Verfahren so zu gestalten, daß beschlagsvermeidende Maßnahmen je nach Notwendigkeit und angepaßt an das Verhalten der sich ändernden Scheibenfeuchte durch beispielsweise in einem Prozessor hinterlegte Eingriffspunkte aktiviert werden, d.h., daß entsprechende beschlagsvermeidende Maßnahmen in Abhängigkeit der Gradienten der sich ändernden Scheibenfeuchte zugeschaltet werden.

Der einzelne Eingriffspunkt wird entsprechend der sich zeitlich und wertmäßig ändernden Scheibenfeuchte im allgemeinen auf 'so früh wie möglich, so spät wie nötig' gelegt, wobei auch die örtlichen Gegebenheiten bzw. die örtlichen Witterungsbedingungen beim Einsatz des Verfahrens mit berücksichtigt werden können. Diese äußeren Einflußgrößen können die Geschwindigkeit, die Außentemperatur und /oder der Sonnenstand sein.

So werden beispielsweise bei einer gemessenen konstant hohen Scheibenfeuchte keine Maßnahmen aktiviert. Dies insbesondere dann nicht, wenn diese hohe Scheibenfeuchte in den Gebieten vorherrscht, in denen die mit diesem Verfahren ausgerüsteten Kraftfahrzeuge geführt werden. Bei einer langsam zunehmenden Scheibenfeuchte erfolgt die Aktivierung der den Beschlag vermeidenden Maßnahmen so spät wie möglich. Eine schnell ansteigende Scheibenfeuchte bewirkt hingegen einen zeitlich früheren Eingriff durch Gegenmaßnahmen, als bei einer langsam zunehmenden Scheibenfeuchte.

Die Begriffe schnelles und langsames Ansteigen werden je nach Erfahrungswert softwaremäßig definiert. Auch das Festlegen des jeweiligen Eingriffspunktes wird softwaremäßig realisiert, wobei die entsprechenden Stützpunkte vorzugsweise in einer Tabelle im Prozessor hinterlegt sind.

Dadurch, daß durch variable Eingriffspunkte die Maßnamen erst dann aktiviert werden, wenn diese wirklich notwendig sind, wird im Fahrzeuginnenraum eine optimale Wellness realisiert. Zusätzlich ergeben sich Energieeinsparungen durch bedarfsgerechte Zuschaltung des Klimaprozessors etc.

Die Rücknahme anstehender Antibeschlagsmaßnahmen erfolgt vorzugsweise unter zwei Gesichtspunkten, genügend großer Abstand zum Taupunkt und Aktivierung von minimalen Maßnahmen zur sicheren Vermeidung von Beschlag bei minimalem Komfortverlust.
Die Wirksamkeit der ergriffenen Maßnahmen wird über die Scheibenfeuchte überwacht. Bei Bedarf, beispielsweise die Scheibenfeuchte bleibt konstant hoch oder steigt stetig weiter, werden weitere Maßnahmen zur Beschlagsvermeidung ergriffen.

Der Sensor als auch der Mikroprozessor können in einem Sensormodul integriert sein, das ein Signal direkt an diverse beschlagsvermeidende Baugruppen gibt.

### Kurze Beschreibung der Zeichnung

Anhand eines Ausführungsbeispiels mit Zeichnung soll die Erfindung näher erläutert werden.

Es zeigt
- Fig. 1: eine Blockbilddarstellung des Verfahrens,
- Fig.2: eine diagrammartigen Darstellung das Funktionsprinzip des Verfahrens.

### Wege zur Ausführung der Erfindung

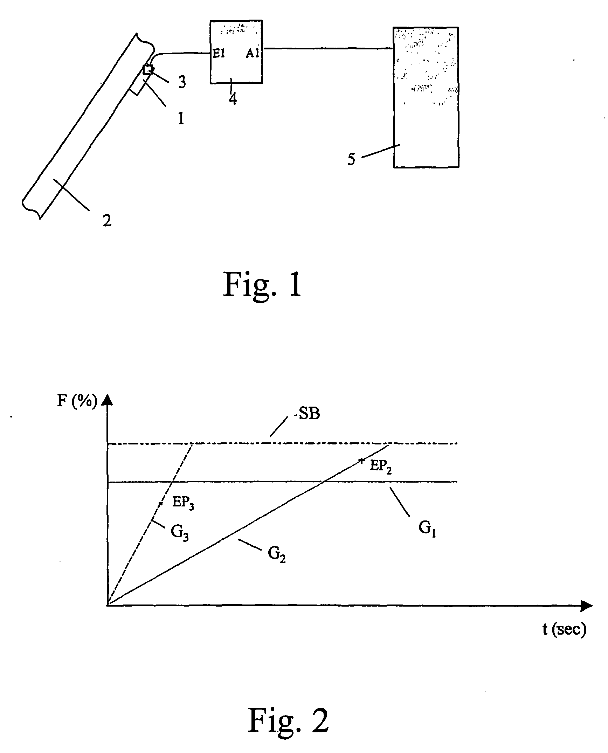

In Fig. 1 ist mit 1 ein Sensor bezeichnet, der auf einer Scheibe 2 angebracht ist. Der Sensor 1, der vorzugsweise als Sensormodul ausgebildet ist und eine darin befindliche Auswerteelektronik 3 besitzt, ist mit dem Eingang E1 eines Mikroprozessors 4 elektrisch verbunden. Mit dem Ausgang A1 des Prozessors 4 sind diverse beschlagsvermeidende Baugruppen 5 verbunden.
Im Prozessor 4 sind Vergleichsdaten und Eingriffspunkte EPₙ in Form von Daten hinterlegt, mit deren Hilfe nach zeitlicher und wertmäßiger Änderung der Scheibenfeuchte F die Verhaltensänderung erkannt und die beschlagsvermeidenden Baugruppen 5 einzeln oder aber auch gemeinsam angesteuert werden.

Bei diesem Verfahren wird vom allgemeinen Beschlagsprinzip ausgegangen, daß zwischen 0% Scheibenfeuchte F₀ bis zum sichtbaren Beschlag F₁₀₀ ab 100 % die Phase der erhöhten Beschlagsneigung durchlaufen wird. Diese erhöhte Beschlagneigung ergibt sich jedoch aus den Umgebungsdaten der Scheibe 2, die sich mehr oder weniger ändern können, so daß auch die Scheibe ein unterschiedliches Verhalten zur Beschlagsbildung zeigt. Wird eine erhöhte Beschlagsneigung an der Scheibe detektiert, wobei diese erhöhte Beschlagsneigung durch die variablen Eingriffspunkte EPₙ definiert wird, werden zu diesem Zeitpunkt erste Gegenmaßnahmen eingeleitet, wobei spätestens ab dem sichtbaren Beschlag maximale Antibeschlagsmaßnahmen aktiviert werden müssen.

Zur Erläuterung des Verfahrens wird von drei der häufigsten unterschiedlichen Zuständen bzw. Verhaltensweisen einer Scheibenfeuchte F ausgegangen. Diese können konstant hoch, langsam zunehmend oder schnell zunehmend sein.

Erfindungsgemäß wird nun für jede Verhaltensform der erhöhten Beschlagsneigung in Abhängigkeit der sich ändernden Scheibenfeuchte F ein oder kein Eingriffspunkt EP definiert, ab dem die Aktivierung als auch die Anzahl der zu aktivierenden Baugruppen 5 erfolgt.

Diese Eingriffspunkte EP werden wie folgt festgelegt:

Für eine stetig konstant hohe Scheibenfeuchte F wird kein Eingriffspunkt EP vorgesehen, da sich hierbei die gemessenen Werte dem Grenzwert des sichtbaren Beschlages SB nicht annähern. Erst ab einer sehr hohen Scheibenfeuchte F, beispielsweise 90%, führt eine zeitliche Integration zur Einleitung von Antibeschlagsmaßnahmen.

Bei einer langsam zunehmenden Scheibenfeuchte F wird der Eingriffspunkt EP₂ später gewählt, beispielsweise bei 90% Scheibenfeuchte F. Dies ist möglich, da sich die stetig gemessenen Werte nur allmählich dem Grenzwert des sichtbaren Beschlages SB annähern und somit ein später Eingriff auch bei einer höheren Scheibenfeuchte F rechtzeitig die beschlagsvermeidenden Maßnahmen aktivieren kann.

Bei einem schnellen Anstieg der Scheibenfeuchte F liegt der Eingriffspunkt EP₃ wertmäßig und zeitlich wesentlich vor dem Eingriffspunkt EP₂, beispielsweise bei 70% Scheiben- feuchte F.

Die so festgelegten Eingriffspunkte EP_{2,3} regeln je nach Umstand eine individuelle Zuschaltung der Maßnahmen.

Diese Verhaltensformen sind in Fig. 2 in Form Von drei unterschiedlichen Feuchtekurven G₁, G₂, G₃, dargestellt. Die Kurven G_{1bis 3} weisen unterschiedliche, für das Beispiel willkürlich gewählte Steigungen auf.
Die erste Kurve G₁ widerspiegelt den zeitlichen Verlauf einer konstant hohen Scheibenfeuchte F, die zweite Kurve G₂ den einer langsam zunehmenden Scheibenfeuchte F und die dritte Kurve G₃ den einer schnell ansteigenden Scheibenfeuchte F. Mit SB ist ein für die Feuchte F = 100% sichtbarer Beschlag dargestellt, der als Grenzwert für das Verfahren fungiert. In der Fig. 2 sind auch die Eingriffspunkte EP_{2,3} eingetragen.
Wird nun im funktionsgemäßen Gebrauch vom Mikroprozessor 4 in Auswertung der Sensorsignale des Sensors 2 eine konstant vorherrschende Scheibenfeuchte F detektiert, erfolgt kein Zuschalten der Baugruppen 5, wenn dieser Wert der Scheibenfeuchte F unterhalb eines festgelegten Grenzwertes SB bleibt.
Steigen hingegen die gemessenen Werte an, erfolgt eine Bewertung im Mikroprozessor 4. Hierbei wird festgestellt, ob sich die Werte langsam oder schnell verändern. Je nach Verhaltensbestimmung ermittlet der Mikroprozessor 4 die zu diesem Verhalten hinterlegten Eingriffspunkte EP.

## Patentansprüche

1. Verfahren zur Beschlagsvermeidung an Scheiben, insbesondere einer Kraftfahrzeugscheibe, wozu Sensorsignale ausgewertet und bei Erreichen eines Grenzwertes beschlagsvermeidende Maßnahmen aktiviert werden, wobei
- die beschlagsvermeidenden Maßnahmen in Abhängigkeit vom Gradienten der sich ändernden Scheibenfeuchte (F) zugeschaltet werden, **dadurch gekennzeichnet, daß** dazu variable Eingriffspunkte (EPₙ) hinterlegt sind, deren wertmäßiger Betrag je nach Verlauf der Scheibenfeuchte (F) definiert ist.

2. Verfahren nach Anspruch 1, **dadurch gekennzeichnet, daß**
- bis zu einem Grenzwert für eine gleichbleibende Scheibenfeuchte (F) kein Eingriffspunkt,
- für eine langsame Änderung der Scheibenfeuchte (F) der Eingriffspunkt (EP₂) wertmäßig höher und zeitmäßig später als der Eingriffspunkt (EP₃) bei einer schnellen Änderung der Scheibenfeuchte (F) festgelegt wird.

3. Verfahren nach Anspruch 1 oder 2, **dadurch gekennzeichnet, daß**
- für eine langsame Änderung der Scheibenfeuchte (F) der Eingriffspunkt (EP₂) beliebig festgelegt werden kann und ca. 80-90% der Scheibenfeuchte (F) betragen kann.

4. Verfahren nach Anspruch 1 oder 2, **dadurch gekennzeichnet, daß**
- für eine schnelle Änderung der Scheibenfeuchte (F) der Eingriffspunkt (EP₃) beliebig festgelegt werden kann und ca. 60-70% der Scheibenfeuchte (F) betragen kann.

5. Verfahren nach einem der Ansprüche 1 bis 4, **dadurch gekennzeichnet, daß** äußere Einflüsse bei der Festlegung der Eingriffspunkte (EPₙ) berücksichtigt werden.

6. Verfahren nach einem der Ansprüche 1 bis 5, **dadurch gekennzeichnet, daß** die äußeren Einflußgrößen Geschwindigkeit, Außentemperatur, Sonnenstand sein können.

7. Verfahren nach einem der Ansprüche 1 bis 6, **dadurch gekennzeichnet, daß** die Überwachung der ergriffenen Maßnahmen über die Scheibenfeuchte (F) überwacht wird.

## Claims

1. Method for avoiding mist on window panes, in particular a motor vehicle window pane, to which end sensor signals are evaluated and mist avoidance measures are activated upon the reaching of a limiting value, the mist avoidance measures being switched in as a function of the gradient of the changing window pane moisture (F), **characterized in that**
- there are stored to this end variable intervention points (EP_{N}) whose magnitude is defined depending on the profile of the window pane moisture (F).

2. Method according to Claim 1, **characterized in that**
- up to a limiting value for a constant window pane moisture (F), no intervention point is fixed, and
- for a slow change in the window pane moisture (F) the intervention point (EP₂) is fixed at a higher magnitude and later in time than the intervention point (EP₃) in the case of a rapid change in the window pane moisture (F).

3. Method according to Claim 1 or 2, **characterized in that**
- for a slow change in the window pane moisture (F) the intervention point (EP₂) can be fixed as desired, and can amount to approximately 80-90% of the window pane moisture (F).

4. Method according to Claim 1 or 2, **characterized in that**
- for a rapid change in the window pane moisture (F) the intervention point (EP₃) can be fixed as desired, and can amount to approximately 60-70% of the window pane moisture (F).

5. Method according to one of Claims 1 to 4, **characterized in that** external influences are taken into account when fixing the intervention points (EPₙ).

6. Method according to one of Claims 1 to 5, **characterized in that** the external parameters can be speed, ambient temperature and the position of the sun.

7. Method according to one of Claims 1 to 6, **characterized in that** the measures taken are monitored by monitoring the window pane moisture (F).

## Revendications

1. Procédé pour éviter la buée sur des vitres, notamment sur une vitre d'un véhicule automobile, pour lequel on évalue des signaux d'un capteur et à l'atteinte d'une valeur limite, on active des mesures destinées à éviter la buée,
- les mesures destinées à éviter la buée étant mises en circuit en fonction du gradient de l'humidité qui se modifie sur la vitre (F),
**caractérisé en ce que**
des points d'intervention variables (EPₙ), dont le montant en valeur est défini en fonction de la courbe d'humidité de la vitre (F) sont sauvegardés à cet effet.

2. Procédé selon la revendication 1, **caractérisé en ce que**
- jusqu'à une valeur limite pour une humidité constante sur la vitre (F), on ne détermine aucun point d'intervention,
- pour une modification lente de l'humidité sur la vitre (F), le point d'intervention (EP₂) est déterminé à une valeur plus élevée et plus tard dans le temps que le point d'intervention (EP₃) pour une modification rapide de l'humidité sur la vitre (F).

3. Procédé selon la revendication 1 ou 2, **caractérisé en ce que**
- pour une modification lente de l'humidité sur la vitre (F), on peut déterminer le point d'intervention (EP₂) de façon quelconque et **en ce qu'**il peut concerner environ 80 à 90 % d'humidité sur la vitre (F).

4. Procédé selon la revendication 1 ou 2, **caractérisé en ce que**
- pour une modification rapide de l'humidité sur la vitre (F), on peut déterminer le point d'intervention (EP₃) de façon quelconque et **en ce qu'**il peut concerner environ 60 à 70 % d'humidité sur la vitre (F).

5. Procédé selon l'une quelconque des revendications 1 à 4, **caractérisé en ce que** des influences extérieures sont prises en considération lors de la détermination des points d'intervention (EPₙ).

6. Procédé selon l'une quelconque des revendications 1 à 5, **caractérisé en ce que** les valeurs d'influences extérieures peuvent être la vitesse, la température extérieure, la position du soleil.

7. Procédé selon l'une quelconque des revendications 1 à 6, **caractérisé en ce que** la surveillance des mesures engagées est assurée par l'intermédiaire de l'humidité sur la vitre (F).
